Europäisches Patentamt

European Patent Office (11) Publication number: **0 084 759**
**A1**

Office européen des brevets

(12) **EUROPEAN PATENT APPLICATION**

(21) Application number: **82830015.2**

(51) Int. Cl.³: **C 09 K 5/00**

(22) Date of filing: **26.01.82**

(43) Date of publication of application: **03.08.83**
Bulletin **83/31**

(84) Designated Contracting States: **AT BE CH DE FR GB IT
LI LU NL SE**

(71) Applicant: **T.P. System S.a.s di Pittaluga Giuseppe & C.,,
Via XII Ottobre 12-3, I-16100 Genova (IT)**

(72) Inventor: **Pittaluga, Pietro, Via Fumagalli, 2/6, Genova
(IT)**

(74) Representative: **Notarbartolo, Manfredi et al, Studio
Brevetti e Marchi NOTARBARTOLO & GERVASI Viale
Bianca Maria, 33, I-20122 Milano (IT)**

(54) Additive to add to the water circulating in civil and industrial heating plants, in order to reduce their energy requirements.

(57) The invention relates to a multi-component additive con-
taining as an essential component, at least a thickner agent to
be added to the circulating water in civil and industrial heating
plants, in order to reduce the energy requirements, obtaining a
circulating liquid showing a pH from 7 to 9 and a freezing tem-
perature from 0 to −15 °C.
The invention also relates to the circulating liquid, ob-
tained by mixing the water circulating in a heating plant with an
additive.
The additive generally comprises an aqueous solution of
one or more thickner agent, alkalynizers, antifreezers, surfac-
tants, antifoams, sequestrating agents, bactericides, antimil-
dew, and in case also other possible substances with different
or complementary action, according to the circumstances.

Additive to add the water circulating in civil and indu
           to
strial heating plants, in order to reduce their energy
requirements.

The present invention relates to a particular additive, hereinafter also named P44, to be added to the heating plant
water, which reduces the energy consumption of said plants,
other conditions being equal.

We have found that the starting and blowing-out times of the same heating plant, in which once circulated the water and once the liquid (water with additive), were notably different. More precisely we have found that in the heating of a plant, containing water and an additive in suitable proportion, the burner remains blown-out for a longer time than when the plant contains water alone.

The said additive comprises a solution of a thickener agent, preferably selected in the group comprising a polymer of the salified acrylic acid, salified carboxymethylcellulose and an alkaline alginate.

Among the employed polymers, very good results were obtained with water soluble polymers of the salified acrylic acid, named Densomol, Montedison name, having a pH between 8 and 9, and used, e.g., as cloth permanent dressing.

Further we have found that the thickner solution is compatible with the ethylene glycol and with other alcohols, known in particular as antifreezers.

The addition of butylic alcohol and particularly of iso-propylic alcohol allows a better solubilization of the thickner agent, surprisingly affording further energy reduction.

A small amount, say 0,1-1% of ammonia may be advantageously added to the additive which regulates the pH between 7 and 9 and reacts with chlorine if chlorine is present in the water. In such conditions we have found that the obnoxious effects of chlorine, which tends to obstacle the reduction of the heating plant energy consumption, are overcome.

A small amount, e.g. 0,1-1%, of formaldehyde may be added, as a bactericide, and the same amount of a sequestrant, such as polyphosphate or the ethylenediamine tetracetic acid sodium salt may be used. Other substances such as antirust, surfactants, antifoam and also others may be added.

Preferably the additive, for transport economy, may be sold as a concentrated aqueous viscous solution containing said polymer of the salified acrylic acid, ethylene glycol, iso-propylic alcohol, ammonia, formaldehyde, the ethylenediamine tetracetic acid sodium salt, having e.g. the following composition in parts by weight (p.b.w.) :

| -thickener agent | p.b.w. | 80 |
|---|---|---|
| -Isopropanol | " | 12 |
| -Ethyleneglycol | " | 4 |
| -Ammonia | " | 0,15 |
| -Formaldehyde | " | 0,2 |
| -Ethylenediamine tetracetic acid sodium salt | " | 0,4 |
| -Antifoam | " | 0,6 |
| -Water, balance to 100 | | |

Naturally it is also possible to have an additive containing one or more other polymers and one or more other substances; one of these different additives is added to the water of the heating plant, having first discharged therefrom an equal water volume.

Hereinafter we report the composition intervals of the circulating liquid additioned with an additive of the invention

|  | % |
|---|---|
| Thickener agent | 0,2-2,0 |
| Propylic alcohol | 0-0,35 |
| Ethylene glycol | 0-0,2 |
| Formaldehyde | 0-0,025 |
| Ammonia | 0-0,025 |
| Ethylenediamine tetracetic acid sodium salt | 0-0,025 |
| Anti-foam | 0-0,025 |
| Water, balance to 100% | |

The amount of ethylene glycol may be further increased if it is wished to further lower the freezing point of the additive and water mixture.

We have surprisingly discovered that, employing the additive of the present invention in such an amount as to have in the circulating water a content in thickener agent, generally not higher than 2% of the whole quantity of the water contained in a heating plant, one can obtain an energy saving of about 25%, as it results from the example hereinafter referred to.

Numerous have been the experiments performed on heating plants also of different potentiality and type, e.g. on plants for the production of sanitary hot water, with heat exchangers, in different localities and with different fuels always obtaining an energy saving around 25%.

We do not wish to refer here on the causes which allow to said additive said energy saving, but only refer on the results in particular obtained in the following example, which appears particularly illustrative.

EXAMPLE 1

An experiment was started, on a heating plant of 350.000 Kcal/h, in winter time and lasted 15 days. During this experiment it was controlled that the temperature in the flats, was the one programmed of 19-20°C.

The boiler of the heating plant was regulated at 80°C, a four ways motorized mixing valve was in operation and an external temperature probe was provided together with all the necessary control equipment.

An additive of the following composition was prepared

| | | |
|---|---|---|
| Thickener agent | p.b.w. | 70 |
| Isopropanol | " | 12 |
| Ethylene glycol | " | 4 |
| Ammonia at 31,75% | " | 0,4 |
| Formaldehyde at 36% | " | 0,2 |
| Ethylenediamine tetracetic acid sodium salt | " | 0,4 |
| Anti-foam | " | 0,6 |
| Water balance to | p.b.w. | 100 |

This additive was added in a 2% amount to the water of the heating plant, (after discharging an equal amount of water), obtaining a mixture having a pH value of 8 and a freezing temperature of -4°C.

It was found that the external temperature, during the experiment showed only a very limited change.

We found in particular that the use of the additive, resulted in a saving of fuel of about 25%.

## C l a i m s

1. An additive to be added to the circulating water of heating plants wherein it contains a thickener agent selected in a group constituted by : a salified acrylic acid polymer, a salified carboxymethylcellulose and an alkaline alginate.

2. An additive according to claim 1 wherein the thickener agent in the additive is less than 80% by weight.

3. An additive according to claim 1 or 2 wherein it further contains an alcohol selected in the group constituted by ethylene glycol, propanol and butanol.

4. An additive according to a preceding claim wherein the amounts of propanol and butanol are less than 15%.

5. An additive according to a preceding claim wherein it contains ammonia in an amount lower than 1%.

6. An additive according to a preceding claim wherein it contains formaldehyde in an amount lower than 1%.

7. An additive according to a preceding claim wherein it contains an antifoam agent in an amount lower than 1%.

8. An additive according to a preceding claim particularly suited for transport in a tank car wherein it shows the following composition :

| | | |
|---|---|---|
| Thickener agent | p.b.w. | 70 |
| Propanol | " | 12 |
| Ethylene glycol | " | 4 |

| Ammonia | | p.b.w. | 0,15 |
| Formaldehyde | | " | 0,2 |
| Ethylenediamine tetracetic acid sodium salt | | " | 0,4 |
| Antifoam | | " | 0,6 |
| Water balance to p.b.w. 100 | | | |

9. An additive according to a preceding claim wherein it further contains a small quantity of at least one of the following compounds : an anti-rust, a surfactant, a sequestrating agent-particularly a poly phosphate- and an ethylenediamine tetracetic acid sodium salt and others suitable.

10. An additive having the same composition as in the example.

11. A liquid circulating in a heating plant containing up to 2,5% of the additive of claim 8

12. A liquid circulating in the heating plant according to claim 10 containing up to 40% of ethylene glycol, having a pH comprised between 7 and 9 and a freezing temperature between 0 and -15°C.

13. A liquid circulating in a heating plant according to claim 11 or 12 wherein it contains :

| Thickener agent | 0,2-2,0% |
| Propanol | 0-0,35% |
| Ethylene glycol | 0-0,2% |
| Formaldehyde | 0-0,25% |

| | |
|---|---|
| Ammonia | 0-0,025% |
| Ethylenediamine tetracetic acid sodium salt | 0-0,025% |
| Anti-foam | 0-0,025% |
| Water balance to 100% | |

* * * * *

European Patent Office

**EUROPEAN SEARCH REPORT**

Application number

EP 82 83 0015

## DOCUMENTS CONSIDERED TO BE RELEVANT

| Category | Citation of document with indication, where appropriate, of relevant passages | Relevant to claim |
|---|---|---|
| X | US-A-2 264 388 (LAMPREY) *Claims 1,3* | 1 |
| X | US-A-2 264 387 (LAMPREY) *Claims 1,2,3* | 1 |
| X | FR-A-2 057 577 (GOSUDARSTVENNY) *Claims 1,3* | 1 |
| A | US-A-2 264 363 (CLAPSADLE) | |
| A | US-A-3 630 914 (NANKEE) | |

CLASSIFICATION OF THE APPLICATION (Int. Cl. 3)

C 09 K 5/00

TECHNICAL FIELDS SEARCHED (Int. Cl. 3)

C 09 K

The present search report has been drawn up for all claims

| Place of search | Date of completion of the search | Examiner |
|---|---|---|
| THE HAGUE | 12-05-1982 | NICOLAS H.J.F. |